Europäisches Patentamt

(19) European Patent Office

Office européen des brevets

(11) Numéro de publication : **0 053 958**
**B1**

(12) **FASCICULE DE BREVET EUROPÉEN**

(45) Date de publication du fascicule du brevet :
30.01.85

(21) Numéro de dépôt : **81401797.6**

(22) Date de dépôt : **13.11.81**

(51) Int. Cl.⁴ : **H 04 L 25/49**, H 04 N   7/13

(54) **Procédé de transcodage parallèle série d'un train numérique parallèle.**

(30) Priorité : **05.12.80 FR 8025907**

(43) Date de publication de la demande :
**16.06.82 Bulletin 82/24**

(45) Mention de la délivrance du brevet :
**30.01.85 Bulletin 85/05**

(84) Etats contractants désignés :
**AT BE DE GB LU NL**

(56) Documents cités :
**GB-A- 1 089 551**
**GB-A- 1 540 617**
**GB-A- 1 569 076**
**GB-A- 2 041 702**
**GB-A- 2 056 225**
**US-A- 3 215 779**

(73) Titulaire : **THOMSON-CSF**
**173, Boulevard Haussmann**
**F-75379 Paris Cedex 08 (FR)**

(72) Inventeur : **Grimaldi, Jean-Luc**
**THOMSON-CSF SCPI 173, bld Haussmann**
**F-75360 Paris Cedex 08 (FR)**

(74) Mandataire : **Turlèque, Clotilde et al**
**THOMSON-CSF SCPI 173, Bld Haussmann**
**F-75379 Paris Cedex 08 (FR)**

# 0 053 958

## Description

L'invention se rapporte au traitement de signaux vidéo numérisés et plus particulièrement à un procédé de transcodage d'un train numérique vidéo de huit éléments binaires parallèles.

Dans la télévision dite numérique, les signaux vidéo sont transmis sous forme d'un train de mots de huit éléments binaires (e. b.) résultant du codage à deux états par non retour à zéro (NRZ) du signal vidéo sur 256 niveaux. De tels signaux peuvent être exploités tels quels dans une station de réception, mais dans certains cas, par exemple dans des réseaux de distribution locaux, ils sont retransmis sous forme d'une suite série d'éléments binaires. Lorsque cette retransmission est effectuée par l'intermédiaire d'un câble coaxial, des dispositifs de conversion parallèle-série mettant en œuvre un procédé de transcodage utilisant un code ternaire (3 états possibles pour coder les deux niveaux 1 et 0) peuvent être utilisés. Ils diminuent la bande nécessaire mais ils utilisent un signal à trois niveaux pour reconstituer facilement le rythme des éléments binaires. De tels dispositifs sont difficiles à mettre en œuvre pour la transmission utilisant des câbles optiques car il est difficile de transmettre trois niveaux sur de tels câbles. Par contre les dispositifs à fibres optiques sont moins limités en bande passante.

Il existe des procédés de transcodage de données prévus pour adapter les données au canal de transmission dans lequel elles doivent être transmises. Le brevet GB-A-1 540 617 décrit un tel procédé de transcodage dans lequel les données découpées en mots 7 éléments binaires sont transcodées sous forme de mots de 8 éléments binaires, ce transcodage permettant de limiter la composante continue du signal de données tout en choisissant des mots de 8 éléments binaires sont transcodées sous forme de mots de 8 éléments binaires, ce transcodage permettant de limiter la composante continue du signal de données tout en choisissant des mots de 8 bits ayant suffisamment de transitions pour permettre de restituer convenablement le rythme des données à la réception. Pour résoudre les problèmes de synchronisation, il est prévu dans un brevet, US 3 215 779, de transmettre un mot de synchronisation particulier qui ne se retrouve pas dans la suite des données codées.

Pour la transmission d'un signal de télévision numérisé dans lequel les informations sont déjà sous forme de mots de 8 e. b., le procédé de transcodage décrit ci-dessus ne peut être appliqué.

Le problème à résoudre est donc de réaliser un transcodage parallèle-série particulièrement applicable à la transmission de signal vidéo numérisé sur câble à fibre optique, dans lequel les éléments binaires sont codés sur deux niveaux, le procédé étant tel qu'au prix d'une légère augmentation de bande le signal binaire série a une valeur moyenne quasi constante et présente une richesse de transitions permettant de reconstituer le rythme des éléments binaires.

Suivant l'invention, un procédé de transcodage d'un train numérique de n éléments binaires en mots de $(n + 1)$ éléments binaires choisis dans le groupe des $2^{n+1}$ mots pour limiter la composante continue du signal transcodé en gardant un maximum de transitions, est caractérisé en que, pour $n = 8$, ces mots sont codés en mots de 9 éléments binaires série, choisis dans un sous-ensemble des $2^9$ mots de 9 éléments binaires, ce sous-ensemble comportant d'une part les mots $X_i$ de structure cinq-quatre, soit cinq « 1 »-quatre « 0 » et cinq « 0 »-quatre « 1 », qui ne comportent pas cinq éléments binaires consécutifs identiques et qui ne commencent ou ne se terminent pas par quatre éléments binaires identiques, $i = 1$ à 226, d'autre part des mots $Y_j$ composés de six « 1» et trois « 0 » et leurs compléments à 1, $Z_j$, $j = 1$ à 29, choisis parmi l'ensemble des mots de structure six-trois pour comporter un maximum de transitions, et au moins un mot supplémentaire de synchronisation trame numérique qui ne se retrouve pas dans une suite quelconque des mots précédemment définis.

L'invention sera mieux comprise et d'autres caractéristiques apparaîtront à l'aide de la description qui suit.

Le signal vidéo numérisé disponible sous la forme d'un train parallèle de huit éléments binaires à la fréquence $F_P$ doit être transformé pour sa transmission en série en un signal unique à un rythme $F_s$ supérieur ou égal à 8 $F_P$. Pour cela, le signal vidéo numérisé doit être codé et ce codage doit répondre à un certain nombre de critères :

Tout d'abord le signal série doit comporter suffisamment de transitions pour que l'horloge de rythme $F_s$ puisse être reconstituée, sans augmentation notable de la bande passante.

Par ailleurs la valeur moyenne du signal série doit être quasi constante et égale à la moitié de l'amplitude d'un élément binaire. En effet, dans un système de transmission où les basses fréquences ne sont pas transmises et où le bruit rajouté est le même sur les deux niveaux émis, l'écart entre la valeur moyenne du signal et la valeur 1/2 tend à diminuer l'immunité du canal de transmission au bruit et donc à augmenter le taux d'erreur, à puissance émise constante. Il est donc souhaitable que la valeur moyenne du signal série soit aussi proche que possible de la moitié de l'amplitude d'un élément binaire.

Enfin, le code doit prévoir la possibilité d'introduire une séquence de synchronisation pour la trame numérique, afin de faciliter la reconnaissance d'un début de mot dans le train série et donc de protéger le système contre les erreurs lors du décodage par la reconnaissance de cette séquence de synchronisation trame numérique.

Le procédé de transcodage précisément décrit ci-après, transformant les mots de huit éléments binaires en parallèle en mots de neuf éléments binaires en série, permet d'obtenir un signal répondant aux critères mentionnés ci-dessus.

2

Comme indiqué ci-dessus, les symboles 0 et 1 sont codés à l'aide du code NRZ. Le procédé de transcodage suivant l'invention fait correspondre aux $2^8$ mots possibles du train numérique parallèle de huit éléments binaires, $2^8$ mots formés de neuf éléments binaires choisis parmi les $2^9$ mots possibles. Les neufs éléments binaires de chacun de ces mots étant transmis en série.

Dans l'ensemble formé par les mots de neuf éléments binaires, on distingue entre autres :

126 mots formés de quatre « 1» et de cinq « 0 »,
126 mots formés de cinq « 1 » et de quatre « 0 »,
84 mots formés de six « 1 » et de trois « 0 »,
84 mots formés de trois « 1 » et de six « 0 ».

Les mots de structure quatre « 1 »-cinq « 0 » ou cinq « 1 »-quatre « 0 », dits dans la suite mots de structure quatre-cinq, ont une valeur moyenne, sur neuf éléments binaires, proche par défaut ou par excès de la moitié de l'amplitude d'un élément binaire. En conséquence, une suite aléatoire de mots de structure quatre-cinq, présente une valeur moyenne sur un grand nombre de mots égale à la moitié de l'amplitude d'un élément binaire.

Les mots de structure six « 0 »-trois « 1 » ou trois « 0 »-six « 1 », dits dans la suite mots de structure six-trois, présentent, entre la valeur moyenne sur neuf éléments binaires et la valeur 1/2, un écart important. Par contre, un ensemble de deux mots l'un de structure six « 0 »-trois « 1 », l'autre de structure trois « 0 »-six « 1 » présente une valeur moyenne exactement égale à 1/2.

En conséquence, les mots de neuf éléments binaires retenus sont choisis soit parmi les mots de structure quatre-cinq, soit parmi les mots de structure six-trois, mais dans ce dernier cas, un mot de huit éléments binaires sera codé par un mot de structure six « 0 »-trois « 1 », ou par son complément à 1 selon que, dans les mots codés précédents, le dernier de structure six-trois était un mot de six « 0 »-trois « 1 » ou trois « 0 »-six « 1 ».

Ainsi la valeur moyenne du signal sera toujours quasi constante, égale à 1/2. Par ailleurs, pour obtenir un signal série comportant suffisamment de transitions pour que l'horloge puisse être récupérée facilement, le premier critère étant ainsi vérifié, il est nécessaire d'éliminer les mots qui ne comportent pas suffisamment de transitions. Pour cela, dans l'ensemble des mots de neuf éléments binaires précédemment retenus, ceux qui commencent ou se terminent par quatre éléments binaires ou plus consécutifs identiques sont écartés. Ainsi, deux mots quelconques en série ne présenteront jamais plus de six éléments binaires consécutifs identiques. Par ailleurs, les mots de neuf éléments binaires qui possèdent une suite de cinq éléments binaires ou plus identiques sont également écartés. Ainsi, 26 mots sont écartés des mots de structure cinq-quatre. Les mots de structure quatre « 1 »-cinq « 0 » écartés de l'alphabet du code en suivant les critères précédents sont ceux qui suivent :

Mots de quatre « 1 »-cinq « 0 » exclus :

| | | | |
|---|---|---|---|
| 000001111 | 111100000 | 000010111 | 000011101 |
| 000011110 | 011110000 | 101110000 | 110110000 |
| 111010000 | 100000111 | 110000011 | 111000001 |
| 000011011 | | | |

Leurs compléments à 1 de structure cinq « 1 »-quatre « 0 » sont également écartés de l'alphabet du code.

Parmi les 252 mots possibles de structure cinq-quatre, 226 mots sont donc retenus, soient $X_i$, $i = 1$ à 226. Pour le codage des 256 mots possibles de huit éléments, il en reste 30 auxquels il faut attribuer un mot de structure six-trois. Ces mots sont choisis suivant le critère du nombre maximum de transitions. En pratique, le fond de synchronisation qui correspond au niveau 0 étant codé par un mot de synchronisation particulier à déterminer, il y a donc 29 mots de structure six-trois présentant un maximum de transitions à sélectionner. A titre d'exemple, les mots retenus $Y_j$, $j = 1$ à 29 de structure six « 1 »-trois « 0 » sont ceux qui suivent :

Mots $Y_j$ six « 1 »-trois « 0 » retenus :

| | | | |
|---|---|---|---|
| 010111101 | 110011011 | 101111010 | 011101101 |
| 011011011 | 101110110 | 011110101 | 110110011 |
| 101101101 | 101011101 | 101011110 | 010111101 |
| 011011101 | 110111010 | 010110111 | 110101110 |
| 101011011 | 101010111 | 101101011 | 011101011 |
| 11010110 | 111010101 | 110101011 | 111010110 |
| 110110101 | 111011010 | 110101101 | 101101110 |
| 101110101 | | | |

Leurs compléments à 1, $Z_j$, $j = 1$ à 29, sont également des mots de l'ensemble, un mot de structure six « 1 »-trois « 0 » et son complément à 1 codant le même mot de huit éléments binaires parallèle.

Le mot de synchronisation trame numérique est choisi dans l'ensemble des mots de neuf éléments

3

binaires de façon qu'il ne soit jamais retrouvé en plaçant bout à bout deux mots quelconques de l'alphabet précédemment défini.

Le tableau qui suit représente les mots qui présentent cette caractéristique, obtenus par une recherche systématique dans les mots de structure cinq-quatre, les mots de structure six-trois, et les mots de structure sept-deux.

$$011111110 = S$$
$$100000001 = \overline{S}$$
$$110000000$$
$$001111111$$
$$000000011$$
$$111111100$$

Tous ces mots possibles sont de structure sept-deux, en conséquence, deux d'entre eux sont choisis l'un étant le complément à 1 de l'autre. Dans le mode de réalisation mis en œuvre, les deux premiers mots S et $\overline{S}$ ont été retenus.

Dans le cas particulier de signaux numériques représentatifs d'un signal vidéo, il existe des instants privilégiés pour introduire les mots de synchronisation trame numérique. Ces instants privilégiés sont les instants de synchronisation habituelle de signaux analogiques vidéo, les impulsions de synchronisation lignes et les impulsions de synchronisation trames. De plus, ces synchronisations faisant partie du signal à transmettre, il est possible de confondre la synchronisation à transmettre et la synchronisation trame numérique particulièrement destinée au traitement des signaux numériques. Durant ces instants de synchronisation, pendant lesquels le niveau vidéo est 0, une séquence de synchronisation S $\overline{S}$ S $\overline{S}$ ... est transmise pendant toute la durée de l'impulsion de synchronisation.

Tous les mots de neuf éléments binaires permettant de coder les mots parallèles de huit éléments binaires sont alors déterminés. Dans une phase finale, il reste à attribuer à chaque mot de huit éléments binaires un mot de structure cinq-quatre ou deux mots complémentaires de structure six-trois. Cette attribution est effectuée en tenant compte de la structure particulière des signaux vidéo analogiques et des signaux vidéo numérisés correspondants. En effet, dans le signal vidéo numérisé codé sur huit éléments binaires parallèles, les niveaux 0 à 3 sont réservés à la synchronisation, 0 étant comme indiqué précédemment le niveau du fond de synchronisation. L'amplitude vidéo normale varie entre les niveaux 16 et 240. Les niveaux compris entre 4 et 15 d'une part et 241 à 255 d'autre part servent à coder d'éventuels dépassements. Pour que la valeur moyenne du signal série reste quasi-constante et égale à la moitié de l'amplitude d'un élément binaire, les mots de structure cinq-quatre sont attribués en priorité au codage des niveaux compris entre 16 et 240. Les autres mots, de structure six-trois, codent les mots non codés entre 16 et 240 et les mots correspondants aux dépassements entre 4 et 15 et entre 241 et 255. Le tableau de correspondance précis entre les mots de huit éléments binaires et les mots de neuf éléments binaires retenus comme indiqué ci-dessus est alors mis en mémoire.

Le signal numérique série après transcodage est donc de la forme :

$$X_1 \ X_2 \ X_3 \ Y_1 \ X_4 \ X_5 \ Z_6 \ X_7 \ X_8 \ X_9 \ ... \ S \ \overline{S} \ S \ \overline{S}$$

Le transcodage décrit ci-dessus satisfait donc les trois critères énoncés au début, composante moyenne du signal série quasi-constante, richesse des transitions du signal série pour la reconstitution de l'horloge et présence d'une séquence de synchronisation trame numérique qui ne peut être retrouvée dans le train série.

Un dispositif mettant en œuvre le transcodage décrit ci-dessus peut être avantageusement appliqué à une transmission sur fibre optique mais également à une transmission sur câble coaxial. Il permet de minimiser la complexité du récepteur car il ne nécessite pas la transmission de la composante continue du signal numérique. D'autre part la grande richesse en transitions du signal transmis peut permettre de simplifier les systèmes de récupération d'horloge. Le choix du mot de synchronisation trame numérique ainsi que sa localisation dans le signal numérique vidéo série permettent une excellente protection contre les erreurs de transmission liées à une mauvaise connaissance éventuelle de l'information concernant les débuts de mot dans le train série. Ce procédé de transcodage parallèle série peut donc être mis en œuvre dans un dispositif de transmission de signaux vidéo numérisés dans lequel des méthodes de corrélation éventuellement assez simples permettent une protection parfaite de l'information de début de mot, puisque cette information peut être connue, même avec un taux d'erreur mauvais.

Le dispositif de transmission comporte deux mémoires de transcodage programmées, l'une couplée à l'entrée du canal de transmission délivrant le signal série après transcodage, l'autre couplée à la sortie du canal de transmission par l'intermédiaire d'un circuit de reconnaissance de l'information de début de mot pour restituer à partir du signal série, le train numérique parallèle.

**Revendications**

1. Procédé de transcodage d'un train numérique de n éléments binaires en mots de (n + 1) éléments

4

binaires choisis dans le groupe des $2^{n+1}$ mots pour limiter la composante continue du signal transcodé en gardant un maximum de transitions, caractérisé en ce que, pour n = 8, ces mots sont codés en mots de 9 éléments binaires série, choisis dans un sous-ensemble de l'ensemble des $2^9$ mots de 9 éléments binaires, ce sous-ensemble comportant d'une part les mots $X_i$ de structure cinq-quatre, soit cinq « 1 »-quatre « 0 » et cinq « 0 »-quatre « 1 », qui ne comportent pas cinq éléments binaires consécutifs identiques et qui ne commencent ou ne se terminent pas par quatre éléments binaires identiques, i = 1 à 226, d'autre part des mots $Y_j$ composés de six « 1 » et trois « 0 » et leurs compléments à 1, $Z_j$, j = 1 à 29, choisis parmi l'ensemble des mots de structure six-trois pour comporter un maximum de transitions, et au moins un mot supplémentaire de synchronisation trame numérique qui ne se retrouve pas dans une suite quelconque des mots précédemment définis.

2. Procédé selon la revendication 1, caractérisé en ce que chaque mot $X_i$ correspond à un mot à coder, un mot $Y_j$ et son complément à 1, $Z_j$, correspondant tous deux à un même mot à coder, $Y_j$ ou $Z_j$ étant retenu pour le codage du mot correspondant selon que le mot le plus proche également codé par un mot de structure six-trois, dans la suite déjà codée, a été codé respectivement par un mot $Z_j$ ou un mot $Y_j$, pour que la valeur moyenne du signal série soit quasi constante.

3. Procédé selon la revendication 2, caractérisé en ce que, le train numérique parallèle résultant de la numérisation d'un signal vidéo codé sur $2^8$ niveaux, la synchronisation trame numérique est introduite pendant les impulsions de synchronisation et correspond au niveau 0 du signal vidéo, deux mots de synchronisation complémentaires S et $\overline{S}$ de structure sept-deux comportant sept éléments binaires consécutifs identiques étant transmis alternativement pour coder le niveau 0 et former les séquences de synchronisation trame numérique.

4. Procédé selon l'une quelconque des revendications 1 à 3, caractérisé en ce que le train numérique des mots de huit éléments binaires résultant de la numérisation d'un signal vidéo à $2^8$ niveaux codés sur 8 éléments binaires parallèles, les mots $X_i$ de structure cinq-quatre sont choisis en priorité pour coder les niveaux 1 à 3 réservés à la synchronisation et les niveaux compris entre 16 et 240, les mots $Y_j$ et $Z_j$ de structure six-trois étant utilisés pour coder les mots de huit éléments binaires correspondant aux niveaux 4 à 15 et 241 à 255 présents souvent dans le signal.

## Claims

1. Method of transcoding a digital train of n binary elements into words of (n + 1) binary elements selected from the group of the $2^{n+1}$ words in order to limit the direct component of the transcoded signal while maintaining a maximum of transitions, characterized in that, for n = 8, these words are coded into words of nine serial binary elements selected from a sub-set of the set of $2^9$ words of 9 binary elements, this sub-set comprising, on the one hand, the words $X_i$ of the structure five-four, i. e. five times « 1 »-four times « 0 » and five times « 0 »-four times « 1 », and not comprising five successive identical binary elements and not beginning or ending with four identical binary elements, i = 1 to 226, and on the other hand of the words $Y_j$ composed of six times « 1 » and three times « 0 » and their one's complements, $Z_j$, j = 1 to 29, selected from the set of words of the structure six-three for comprising a maximum of transitions, and at least one additional digital frame synchronization word not occurring within any sequence of the above defined words.

2. Method according to claim 1, characterized in that each word $X_i$ corresponds to a word to be coded, a word $Y_j$ and its one's complement $Z_j$, both corresponding to the same word to be coded, $Y_j$ or $Z_j$ being retained for the coding of the corresponding word depending on whether the closest word likewise coded by a word of the structure six-three within the already coded sequence has been respectively coded by a word $Z_j$ or a word $Y_j$, for obtaining a quasi-constant mean value of the serial signal.

3. Method according to claim 2, characterized in that, the parallel digital train resulting from the digitalization of a video signal coded on $2^8$ levels, the synchronization of the digital frame is introduced during the synchronization pulses and corresponds to the level 0 of the video signal, two complementary synchronization words S and $\overline{S}$ of the structure seven-two comprising seven successive identical binary elements alternatingly transmitted in order to code the level 0 and to form the digital frame synchronization sequences.

4. Method according to any of claims 1 to 3, characterized in that the digital train of the words of eight binary elements resulting from the digitalization of a video signal with $2^8$ coded levels on 8 binary parallel elements, the words $X_i$ of the structure five-four are selected by priority for coding the levels 1 to 3 reserved for the synchronization and the levels comprised between 16 and 240, the words $Y_j$ and $Z_j$ of the structure six-three being used for the coding of the words of eight binary elements corresponding to the levels 4 to 15 and 241 to 255 occurring frequently within the signal.

## Ansprüche

1. Verfahren zum Umcodieren einer digitalen Impulsfolge aus n Binärelementen von Wörtern zu (n + 1) Binärelementen, die aus der Gruppe der $2^{n+1}$ Wörter ausgewählt sind, um die Gleichkomponente

5

des umcodierten Signals zu begrenzen, wobei eine maximale Anzahl von Übergängen bewahrt wird, dadurch gekennzeichnet, daß für n = 8 diese Wörter in serielle Wörter aus neun Binärelementen codiert werden, welche aus einer Untergruppe der Gruppe von $2^9$ Wörtern zu neun Binärelementen ausgewählt sind, wobei diese Untergruppe enthält: einerseits die Wörter $X_i$ der Struktur fünf-vier, d. h. fünfmal « 1 »-viermal « 0 » und fünfmal « 0 »-viermal « 1 », welche keine fünf aufeinanderfolgenden gleichen Binärelemente enthalten und nicht mit vier gleichen Binärelementen anfangen oder enden, i = 1 bis 226, andererseits Wörter $Y_j$, die zusammengesetzt sind aus sechsmal « 1 » und dreimal « 0 » sowie ihren Einerkomplementen, $Z_j$, j = 1 bis 29, ausgewählt unter der Gruppe von Wörtern der Struktur sechs-drei, um eine maximale Anzahl von Übergängen zu enthalten, sowie wenigstens ein zusätzliches Digitalbild-Synchronisationswort, welches in einer beliebigen Folge der zuvor definierten Wörter nicht wiedergefunden wird.

2. Verfahren nach Anspruch 1, dadurch gekennzeichnet, daß jedes Wort $X_i$ einem zu codierenden Wort entspricht, einem Wort $Y_j$ und seinem Einerkomplement $Z_j$, welche beide demselben zu codierenden Wort entsprechen, wobei $Y_j$ oder $Z_j$ für die Codierung des entsprechenden Wortes berücksichtigt wird, je nachdem, ob das am nächsten liegende Wort, das in der bereits codierten Folge ebenfalls durch ein Wort der Struktur sechs-drei codiert wurde, durch ein Wort $Z_j$ oder ein Wort $Y_j$ codiert wurde, damit der Mittelwert des seriellen Signals quasi konstant ist.

3. Verfahren nach Anspruch 2, dadurch gekennzeichnet, daß die Digitalbild-Synchronisation, wenn die parallele Digitalimpulsfolge, welche aus der Digitalisierung eines auf $2^8$ Pegel codierten Videosignals resultiert, während der Synchronisationsimpulse eingeführt wird und dem Pegel Null des Videosignals entspricht, wobei zwei komplementäre Synchronisationswörter S und $\bar{S}$ der Struktur siebenzwei sieben aufeinanderfolgende gleiche Binärelemente enthalten, die abwechselnd übertragen werden, um den Pegel Null zu codieren und die Digitalbild-Synchronisationssequenzen zu bilden.

4. Verfahren nach einem der Ansprüche 1 bis 3, dadurch gekennzeichnet, daß die Wörter $X_i$ der Struktur fünfvier, wenn die Digitalimpulsfolge der Wörter zu acht Binärelementen, welche aus der Digitalisierung eines Videosignals mit $2^8$ Pegeln resultiert, die auf acht parallelen Binärelementen codiert sind, vorrangig ausgewählt werden, um die der Synchronisation vorbehaltenen Pegel 1 bis 3 und die zwischen 16 und 240 enthaltenen Pegel zu codieren, wobei die Wörter $Y_j$ und $Z_j$ der Struktur sechs-drei verwendet werden, um die Wörter zu acht Binärelementen zu codieren, welche den Pegeln 4 bis 15 und 241 bis 255 entsprechen, die in dem Signal oft vorhanden sind.